# EUROPÄISCHE PATENTSCHRIFT

(11) **EP 1 054 217 B1**
(45) Veröffentlichungstag und Bekanntmachung des Hinweises auf die Patenterteilung: **05.10.2005**
(21) Anmeldenummer: 00110085.8
(22) Anmeldetag: 12.05.2000
(51) Int. Cl.: F24D 3/14

(54) **Verfahren zur Herstellung einer Flächenheizung und Heizelementträgerplatte zur Durchführung des Verfahrens**
Method for making a under floor heating and heating element support plate for carrying out the method
Procédé de pose d'un chauffage par le sol et plaque de support d' élement de chauffage pour mettre en oeuvre ce procédé

(30) Priorität: 15.05.1999 DE 19922259
(43) Veröffentlichungstag der Anmeldung: 22.11.2000
(73) Patentinhaber: Wedi, Stephan, 48282 Emsdetten (DE)
(72) Erfinder: Wedi, Stephan, 48282 Emsdetten (DE)
(74) Vertreter: Hoffmeister, Helmut

(56) Entgegenhaltungen:
- EP-A- 0 473 057
- EP-A- 0 606 789
- WO-A-83/01992
- DE-A- 2 823 080
- DE-A- 3 102 885
- DE-A- 4 401 086
- DE-C- 4 234 269
- FR-A- 2 501 847
- US-A- 4 338 994

## Beschreibung

Die Erfindung betrifft eine Heizelementträgerplatte, die mit einem strangförmigen Heizelement belegbar ist und die aus einer Kunststoff-Hartschaumplatte besteht, die auf wenigstens einer Flächenseite mit einer armierten ausgehärteten Mörtelschicht belegt ist und von der anderen Flachseite her mit Aufnahmeausnehmungen versehen ist, in die das Heizelement einlegbar ist, wobei die Armierung der Mörtelschicht unverletzt bleibt.

Eine gattungsgemäße Heizelementträgerplatte ist aus DE 29 802 367 U1 bekannt. Nach der Beschreibung zu diesem Gebrauchsmuster werden in einer handelsübliche Polystyrol-Hartschaumdämmplatte mit beidseitiger armierter Mörtelschicht-Außenlage Profil-Vertiefungen für die Aufnahme von Heizelementen eingeschnitten. Nachteilig bei dieser Heizelementträgerplatte ist für Flächenheizungen allerdings, dass die Platte gestapelt und als sperriges Produkt mit der damit verbundenen Bruchgefahr transportiert werden muß. Auf Baustellen und bei Innenausbauten fehlt oftmals der Platz zur Stapelung derartiger Produkte.

Eine geeignete Bauplatte ist aus der DE 42 34 269 C1 bekannt. Hierbei wird auf einer Flachseite einer Hartschaumplatte ein Glasfasergewebe aufgelegt und dann eine Mörtelschicht so aufgetragen, daß nach dem Aushärten eine armierte Mörtelschicht entsteht. Anschließend kann die gegenüberliegende Flachseite ebenso beschichtet werden. Hierdurch erhält der Schaumstoffkern ein steifes und armiert strukturiertes Sandwich-Gerüst, das ihn sowohl wärmestabil macht, als auch dazu geeignet macht, mit Verkleidungsplatten, also beispielsweise Fliesen, beklebt oder in sonstiger Weise versehen zu werden. Das Element kann verputzt, tapeziert oder gestrichen werden.

Es stellt sich demnach die Aufgabe, ausgehend von einer Bauplatte aus Polystyrol-Hartschaum mit Mörtelbeschichtung, eine für den Transport und die Bereithaltung vereinfachte Platte zu konzipieren.

Diese Aufgabe wird gelöst durch eine Heizelementträgerplatte der eingangs genannten Art, bei der von der Sohle der Aufnahmeausnehmungen bis zur armierten Mörtelschicht Ausnehmungsschnitte durch die Hartschaumplatte geführt sind, so dass die Heizelementträgerplatte zu einer Rolle aufrollbar ist.

An sich ist eine Verlegebasis für Fußbodenheizungsrohre in Form einer rollbaren Einheit bekannt. Die Schrift EP 0 606 789 A1 zeigt ein Fußbodenheizungssystem, das eine rollbare Dämm- und Verlegematte aus Polystyrolschaum einsetzt. Die Matte sitzt Noppen und ist im wesentlichen einschichtig aufgebaut. Nachteilig ist, daß nach dem Verlegen der Heizungsrohre eine dicke Estrichschicht aufgetragen werden muß, auf die erst nach deren Aushärten ein Belag verlegt werden kann und daß die Vorteile einer an sich bekannten Bauplatte aus Polystrol-Hartschaum, wie Verfügbarkeit, Preiswürdigkeit und Verarbeitbarkeit mit verschiedenen Belägen, nicht genutzt werden.

Die mit der Erfindung erzielten Vorteile bestehen insbesondere darin, daß sich durch die Verwendung der Bauplatte eine geringe Bauhöhe realisieren läßt. Die Heizelementaufnahmeausnehmungen sorgen dafür, daß das Heizelement direkt unter einer Belagschicht verläuft, so daß die Wärme direkt auf die Belagschicht übertragen wird. Hierdurch erhöht sich die Effektivität der Flächenheizung ganz wesentlich, da nicht dazwischenliegende Isolierschichten aufgeheizt werden müssen. Die Flächenheizung reagiert darüber hinaus schnell auf Temperaturänderungen.

Für die Aufnahme der Heizelemente kann die Heizelementaufnahmeausnehmung als V-förmige Heizelementausnehmung oder als mehreckförmige Heizelementaufnahmeausnehmung ausgebildet sein. Hierbei ist eine kreisförmige Ausnehmung auch als mehreckige anzusehen.

Die unterschiedlich gestalteten Heizelementaufnahmeausnehmungen können bis zu einem gegenüber der armierten Mörtelschicht beabstandeten Grundflächenelement eingebracht werden. Unterhalb dieses Flächenelementes, d.h. von der Sohle der Aufnahmeausnehmung bis zur armierten Mörtelschicht, ist in die Hartschaumplatte ein Ausnehmungsschnitt eingebracht. Hierdurch ist möglich, die Heizelementträgerplatte ähnlich wie eine Tapetenbahn aufzurollen. Hierdurch wird nicht nur Lagerkapazität, sondern auch Transportraum eingespart. Darüber hinaus läßt sich die Rolle auf der Baustelle wesentlich einfacher auslegen, als große durchgehende Platten.

Durch eingehende Versuche wurde ermittelt, daß die Verwendung einer rechteckförmigen Heizelementausnehmung mit einem sich daran anschließenden Ausnehmungsschnitt bis zur armierten Mörtelschicht am besten für Flächenheizungen verwenden läßt.

Auf das Grundflächenelement kann ein Folienelement aufgelgt, insbesondere aufgeklebt werden und auf diesem dann das Heizelement mit wenigstens einer Befestigungskrampe, einem Rohrklippkörper und/oder wenigstens einem Befestigungsclip befestigt werden. Die Befestigung erfolgt mit entsprechenden Hilfsmitteln wie Kleber, Drähte, Nägel und dergleichen.

Auf das Grundflächenelement kann ein Folienelement aufgelegt und auf diesem dann das Heizelement installiert werden. Dabei kann als Folienelement eine Folie oder eine Isolierfolie mit wenigstens einer Kleberschicht verwendet werden.

Die Heizelementausnehmungen können als Linearausnehmung und/oder Bogenausnehmungen eingebracht werden. Das Einbringen kann durch ein Einfräsen bzw. Einschneiden vollzogen werden. Mit Hilfe der Ausnehmungen ist es möglich, das Heizelement mäanderförmig auf den ausgelegten Platten zu verlegen.

Als Heizelement kann ein Wärmekabel oder ein Fluid-Heizrohr Verwendung finden. Hierdurch ist es möglich, eine Elektro- oder Warmwasser-Fußbodenheizung zu realisieren.

Die Erfindung ist in der Zeichnung dargestellt und wird im folgenden näher beschrieben. Es zeigen:
- Fig. 1a: einen ersten Aufbau einer Fußbodenheizung in einer schematischen, perspektivischen, teilgeschnittenen Darstellung,
- Fig. 1b: einen zweiten Aufbau einer Fußbodenheizung in einer schematischen, perspektivischen, teilgeschnittenen Darstellung,
- Fig. 2: eine zu einer Trägerelementrolle aufgerollte Heizelementträgerplatte für einen Aufbau einer Fußbodenheizung gemäß Fig. 1a in einer schematischen, perspektivischen Darstellung,
- Fig. 3: eine zu einer Heizelementträgerplatte ausgelegte Trägerelementrolle gemäß Fig. 2,
- Fig. 4: einen Schnitt durch einen Aufbau einer Fußbodenheizung gemäß Fig. 1a entlang der Linie IV - IV,
- Fig. 5: eine ausgelegte Heizelementträgerabschlußplatte für einen Aufbau einer Fußbodenheizung gemäß Fig. 1a in einer schematischen, perspektivischen Darstellung,
- Fig. 6: und 7 jeweils einen Ausschnitt aus einer Platte gemäß den Fig. 1a und 2 bis 5 mit einer pyramidenstumpfförmig ausgebildeten Heizelementausnehmung und zwei Ausführungsformen einer Halterung für ein Heizelement in einer schematisch dargestellten Schnittdarstellung,
- Fig. 8: einen Schnitt aus einer Platte gemäß den Fig. 1a und 2 bis 7 mit einer rechteckförmig ausgebildeten Heizelementausnehmung und einem Aufsatzfolienelement für diese in einer schematischen Schnittdarstellung,
- Fig. 9: einen Ausschnitt aus einer Platte gemäß den Fig. 1a 2 bis 5 mit einer dreieckförmigen Heizelementausnehmung in einer schematischen Schnittdarstellung,
- Fig. 10: eine Heizelementträgerplatte für einen Aufbau einer Fußbodenheizung gemäß Fig. 1b in einer schematischen, perspektivischen Darstellung,
- Fig. 11: einen Schnitt durch eine Heizelementträgerplatte gemäß Fig. 10 entlang der Linie XI - XI,
- Fig. 12: einen Schnitt durch eine Heizelementträgerplatte gemäß Fig. 10 entlang der Linie XII - XII,
- Fig. 13a: eine Wärmeplatte für eine Großküche, die Heizelementträger- und Heizelementträgerabschlußplatten gemäß den Fig. 2, 3, 5, 6, 7, 8 und 9 einsetzt in einer schematisch dargestellten Teildarstellung und
- Fig. 13b: eine Wärmeplatte für eine Großküche, die eine Heizelementträgerplatte gemäß den Fig. 10 bis 12 einsetzt, in einer schematisch dargestellten Teildarstellung.

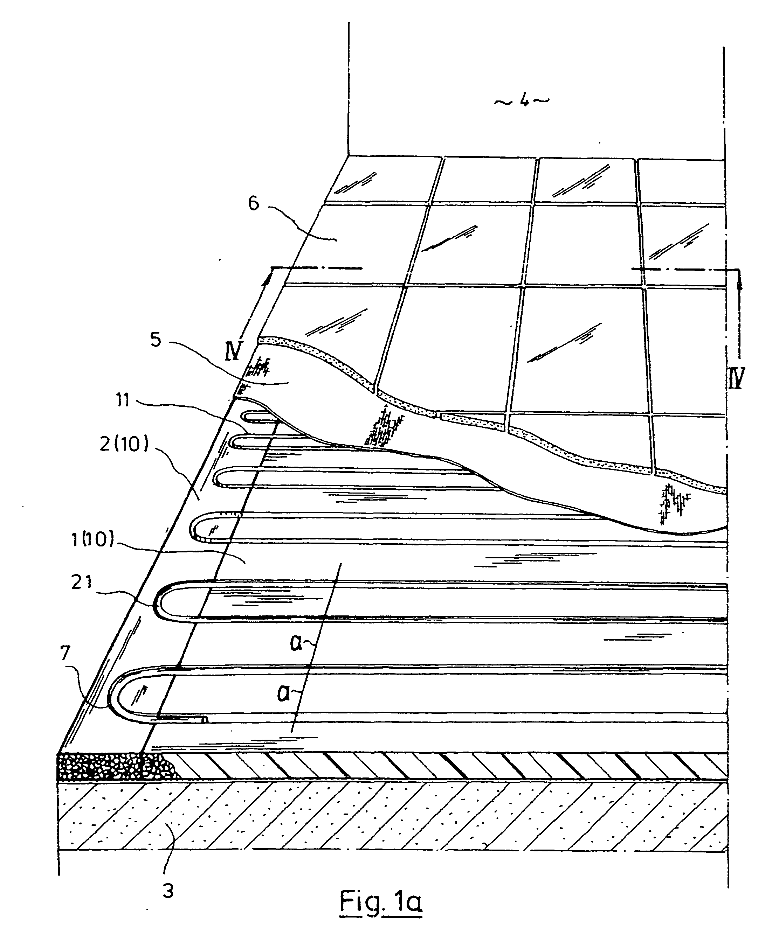

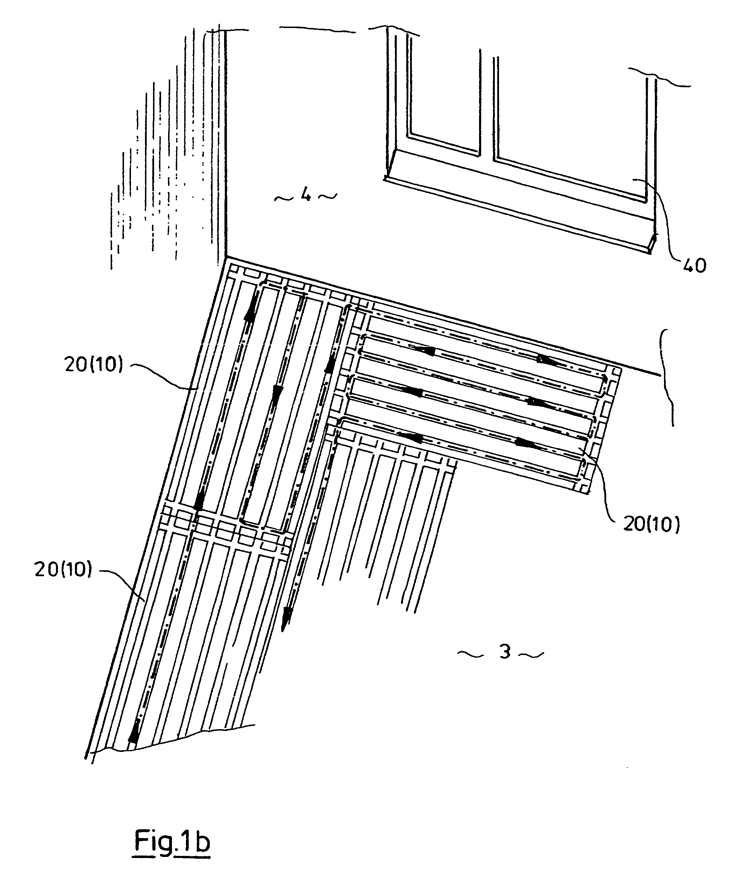

In Fig. 1a ist der Ausschnitt eines Raums dargestellt, der durch wenigstens ein Wandelement 4 und einen Unterbau in Form eines Fußbodenelements 3 begrenzt ist. Das Fußbodenelement 3 kann dabei die Decke eines Neubaus oder ein bereits bestehender Fußboden eines zu renovierenden Gebäudes sein.

In dem dargestellten Raum wird eine Flächenheizung installiert, die auf dem Fußbodenelement 3 verlegt wird.

Hierbei werden auf das Fußbodenelement 3 eine durchgehende Heizelementträgerplatte 1 und daneben eine Heizelementträgerabschlußplatte 2 verlegt.

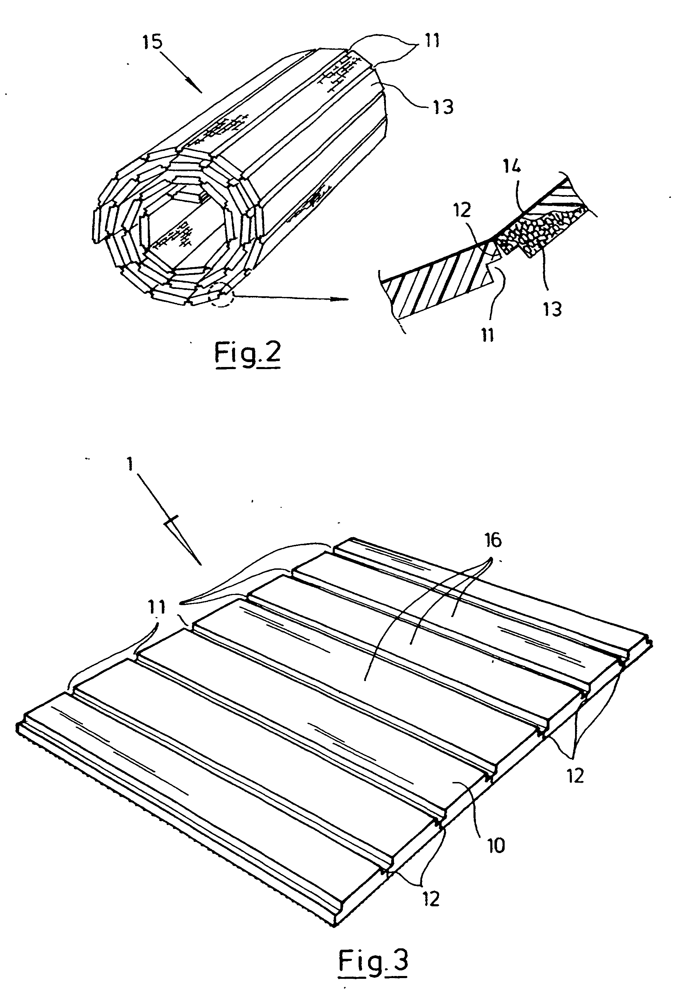

Erfindungswesentlich ist, daß für die Heizelementträgerplatte 1 und die Heizelementträgerabschlußplatte 2 eine Bauplatte 10 verwendet wird. Diese Bauplatte besteht, wie die Fig. 2 bis 9 zeigen, aus einer Hartschaumplatte 13, die auf einer ihrer Flachseiten mit einer armierten Mörtelschicht 14 beschichtet ist. Die armierte Mörtelschicht 14 entsteht dadurch, daß auf der Flachseite der Hartschaumplatte 13 spannungsfrei ein Glasfasergewebe aufgelegt wird und anschließend das Glasfasergewebe mit einem Flüssigmörtel bedeckt wird. Überschüssiger Flüssigmörtel wird über dem Glasfasergewebe abgestrichen, so daß nach dem Austrocknen die Struktur des Glasfasergewebes zu erkennen ist. In gleicher Art und Weise kann die zweite Flachseite der Hartschaumplatte 13 mit einer weiteren armierten Mörtelschicht beschichtet werden. Die Bauplatten 10 können nach diesem Herstellungsverfahren in unterschiedlichsten Längen und Dicken gefertigt werden.

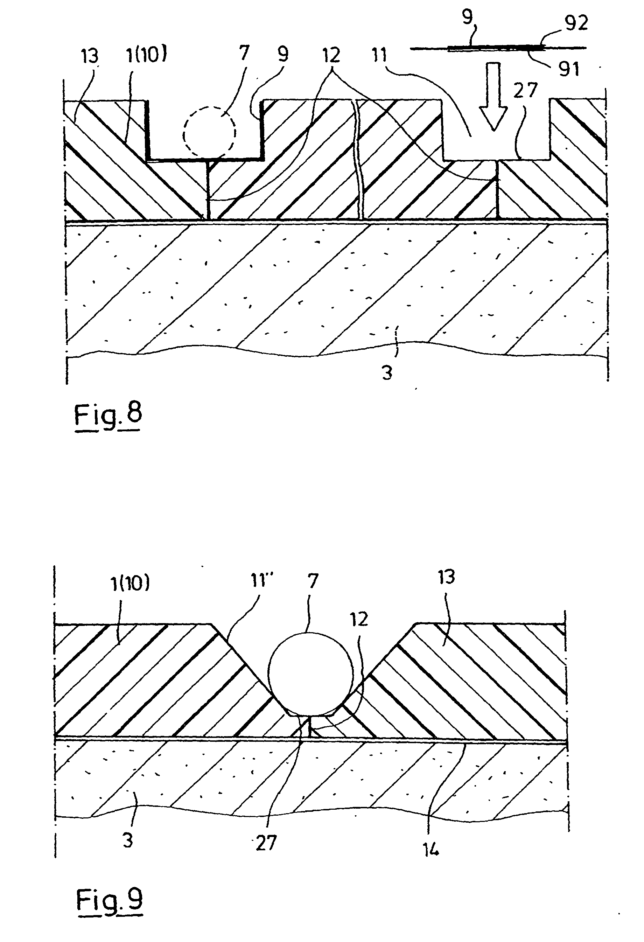

Für den Aufbau einer Flächenheizung kommt eine Hartschaumplatte 13 in einer Dicke zwischen 15 und 50 mm, vorzugsweise 18 mm, zum Einsatz. In diese Hartschaumplatte wird, wie Fig. 8 zeigt, eine im Querschnitt rechteckförmige Heizelementlinearausnehmung 11 eingebracht. Es kann aber auch eine im Querschnitt pyramidenstumpfförmige Heizelementlinearausnehmung 11' in die Hartschaumplatte 13 eingebracht werden. Fig. 9 zeigt eine weitere Ausführungsform in Gestalt einer dreieckförmigen Heizelementlinearausnehmung 11", Diese dreieckförmige Heizelementlinearausnehmung 11" kann als V-förmige Heizelementlinearausnehmung so weit in die Hartschaumplatte 13 eingebracht werden, daß es über der armierten Mörtelschicht 14 endet. Eins ist sämtlichen Heizelementlinearausnehmungen 11, 11' , 11" gemeinsam, daß sie ein Heizelement 7 so aufnehmen, daß sie die Flachseite, die der armierten Mörtelschicht 14 gegenüberliegt, nicht überragt.

Hierdurch ist gesichert, daß das Heizelement sicher aufgenommen wird.

Die Bauplatte 10 hat nicht nur tragende, sondern auch isolierende Eigenschaften. Um diese zu erhalten, werden die Heizelementausnehmungen 11, 11', 11" bis zu einem Ausnehmungsgrundflächenelement 27 geführt, das gegenüber der armierten Mörtelschicht 14 beabstandet ist. Etwa in der Mitte des Ausnehmungsgrundflächenelementes 27 wird bis vor die armierte Mörtelschicht ein senkrechter Ausnehmungsschnitt 12 geführt, der entlang der Heizelementlinearausnehmung 11, 11', 11" erfolgt.

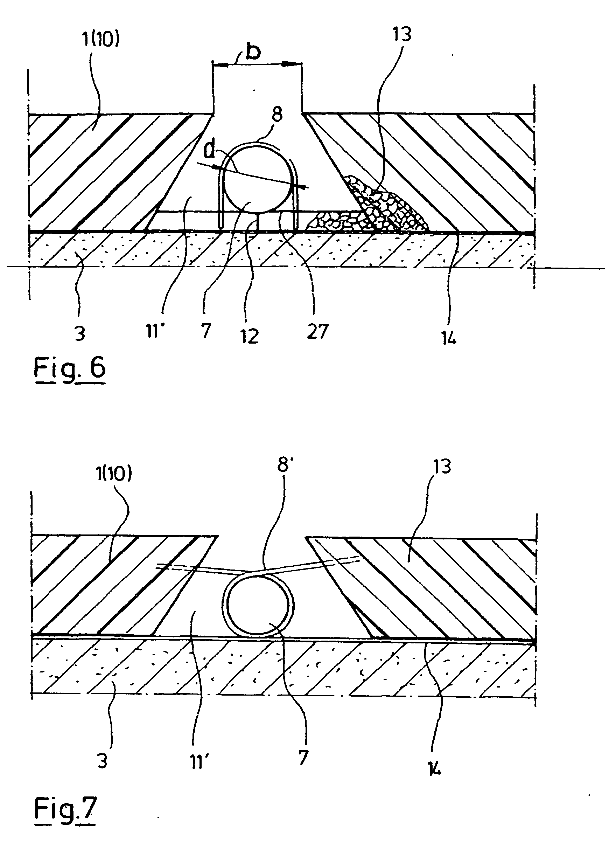

Im Ergebnis langwieriger Versuche werden in die Hartschaumplatte 10, wie die Fig. 1, 3, 4 und 8 zeigen, rechteckförmige Heizelementlinearausnehmungen 11 in einem Abstand a eingebracht. Der Abstand a wird dabei durch die erforderliche Wärmemenge für den jeweiligen Raum bestimmt. Die Breite b der Heizelementlinearausnehmung 11' (vgl. Fig. 6) entspricht dem Durchmesser d des Heizelements 7. Vorteilhaft ist es, wenn b ≤ d ist. Hierdurch wird das verlegte Heizelement 7 trotz vorhandener Verdrehungsspannungen in der Ausnehmung 11' gehalten. Der Abstand a kann 65 mm von Ausnehmungsschnitt 12 zu Ausnehmungsschnitt 12 betragen. Die Tiefe und die Breite der Heizelementlinearausnehmungen beträgt jeweils 10 mm. Durch diese Ausnehmungen und den bis vor die armierte Mörtelschicht 14 geführten Ausnehmungsschnitt 12 ist es möglich, die gerade Heizelementauslegeplatte 1 zu einer Rolle 15 zusammenzurollen, wie Fig. 2 zeigt. Das nichtdurchtrennte Glasfasergewebe der armierten Mörtelschicht 14 sichert den Zusammenhang der Platte, wobei sie die einzelnen Isolierabschnittskörper 16 übereinanderliegend zusammenrollen. Der Radius der Rolle 15 wird dabei durch diese Isolierabschnittskörper 16 bestimmt, während die Ausnehmungen 11 bzw. der Ausnehmungsschnitt 12 eine beliebige Gelenkigkeit dieser Isolierabschnittskörper untereinander gewährleistet, die das Zusammenrollen zu der Rolle 15 erleichtern. Diese Rolle 15 ist bedingt durch die eingesetzte Hartschaumplatte sehr leicht, so daß bis zur Überschreitung des Ein-Mann-Gewichts von ca. 50 kg die Rolle 15 einen recht beachtlichen Durchmesser erreichen kann. Durch die Aufwicklung der Heizelementträgerplatte 1 zu einer Rolle 15 wird sehr teure Lager- und Transportkapazität eingespart. Darüber hinaus wird gesichert, daß die Heizelementträgerplatte 1 nicht an den Heizelementlinearausnehmungen sowie an dem Ausnehmungsschnitt 12 in Einzelteile durchbricht.

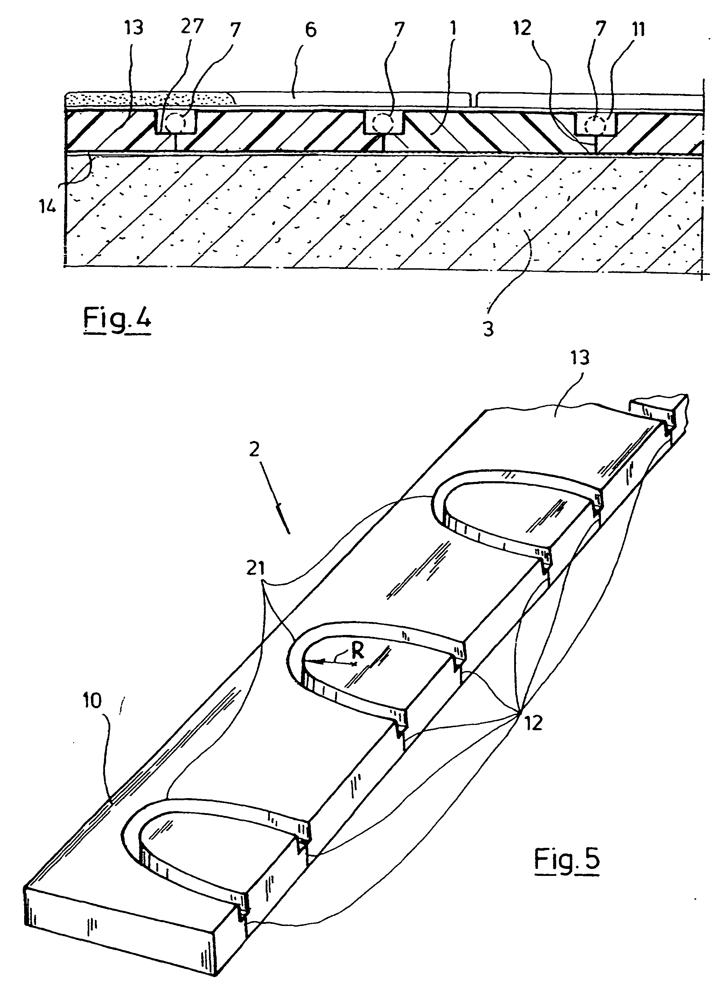

Wie die Fig. 1 und 5 zeigen, wird aus der Bauplatte 10 auch eine Heizelementträgerabschlußplatte 2 gefertigt. Hierbei werden in die Hartschaumplatte 13 Heizelementbogenausnehmungen 21 eingebracht. Die Heizelementbogenausnehmungen sind hinsichtlich ihrer Konfiguration kompatibel zu den Heizelementlinearausnehmungen 11, 11', 11". Sie können daher rechteckförmig, pyraumidenstumpfförmig oder dreieckförmig ausgebildet sein und in einem Ausnehmungsgrundflächenelement enden. Von diesem Ausnehmungsgrundflächenelement 27 gehen, wie die Fig. 5 zeigt, gerade durchgehende Ausnehmungsschnitte 12, die ebenfalls in dem bereits beschriebenen Abstand a untereinander beabstandet sind, bis zur armierten Mörtelschicht 14 durch. Hierdurch wird gewährleistet, daß auch die Heizelementträgerabschlußplatte 2 ebenso wie die Heizelementträgerplatte zu einer Rolle zusammengerollt werden kann. Die Heizelementbogenausnehmungen 21 weisen einen Radius auf, der den bei der Verlegung des Heizelements 7 einzuhaltenden Biegeradius R berücksichtigt. Wie insbesondere Fig. 1 zeigt, werden durch eine Heizelementbogenausnehmung 21 immer zwei Heizelementlinearausnehmungen 11, 11' oder 11" miteinander verbunden. Es sei an dieser Stelle erwähnt, daß die Heizelementträgerplatte 1 als Universalauslegeplatte ausgebildet werden kann, in der die Heizelementelinearausnehmsungen 11, 11', 11" immer den gleichen Abstand a untereinander aufweisen. Durch unterschiedlich große Heizelementbogenausnehmungen 21, die mehr als zwei, also drei oder vier Heizelementlinearausnehmungen miteinander verbindet, ist es möglich, das Heizelement mäanderförmig entsprechend dicht oder weit zu führen, so daß zum einen die benötigte Gesamtraumwärmemenge, aber auch einzelne Abschnitte des Fußbodens besonders intensiv beheizt werden können.

Um die Wärmestrahlung des verlegten Heizelements 7 zu bündeln und zu intensivieren, kann auf dem Ausnehmungsgrundflächenelement 27 der Heizelementlinear- und Heizelementbogenausnehmungen 21 ein Aufsatzfolienelement, wie Fig. 8 zeigt, ausgelegt werden. Das Aufsatzfolienelement 9 kann dabei über eine Kleberschicht 91 verfügen. Mit Hilfe dieser Kleberschicht 91 wird die Folie 9 festgeklebt. Das Einsetzen des Aufsatzfolienelements 9 kann dabei bereits bei der Herstellung der Platten 1 bzw. 2 erfolgen. Das Aufsatzfolienelement 9 wird in diesem Fall gleichfalls beim Einbringen des Ausnehmungsschnitts 12 mit durchtrennt. Die Folie 9 kann aber auch erst auf der Baustelle aufgeklebt werden. Sie kann auf der gegenüberliegenden Seite mit einer weiteren Kleberschicht 92 versehen werden. Mit Hilfe dieser Kleberschicht kann dann das Heizelement befestigt werden. Anstelle dessen kann aber auch die gesamte Fläche anstatt mit einer armierten Mörtelschicht mit einer wärmereflektierenden Schicht versehen werden.

Zwei weitere Befestigungsmöglichkeiten des Heizelements 7 sind in den Fig. 6 und 7 gezeigt. In Fig. 6 wird das Heizelement 7 mit einer Befestigungskrampe 8 in der Heizelementlinearausnehmung bzw. in der Heizelementbogenausnehmung gehalten. Die Krampe 8 ähnelt einer Krampe, die zur Befestigung von Zaundraht an Holzpfählen zum Einsatz kommt. Die Befestigungsvariante mit Hilfe des Befestigungsclips 8*'* nutzt die Weichheit und Stabilität der Seitenwände der Heizelementlinearausnehmungen bzw. Heizelementbogenausnehmungen aus. Der Befestigungsclip 8' ist aus einem elastischen Material hergestellt, das Stahl oder Kunststoff sein kann. Es wird an den Seiten zusammengehalten und beim Einlegen des Heizelements 7 losgelassen, so daß sich die Enden in die weiche Hartschaumplatte 13 einbohren können.

Als Heizelement 7 können fluidführende Heizungsrohre zum Einsatz kommen. Das Fluid kann Öl oder Wasser sein. Kommt als Wärmeträger Wasser oder Wasser mit Zusätzen zum Einsatz, entsteht eine Warmwasser-Fußbodenheizung. Die Fluidheizrohre können aus Kupfer oder Kunststoff hergestellt sein.

Bei einer Elektro-Fußbodenheizung kommt als Heizelement ein Wärmekabel 7 zum Einsatz. Das Wärmekabel 7 besteht aus Widerstandsdrähten, die von einer Isolation umgeben sind. Als konventionelles Heizkabel werden sie von einem weiteren Kunststoffmantel umgeben. Beide Kunststoffmäntel bestehen aus einem PEX-Kunststoff. Um den weiteren Kunststoffmantel ist eine Schicht aus Zinkkontakt mit Kupferdrähten gelegt. Als Außenmantel des Kabels wird ein PVC-Mantel verwendet.

Als Multiflex-Heizkabel besteht das Wärmekabel 7 aus dem PVC-Außenmantel, die die Zinnschicht mit den Kupferdrähten umhüllt. Unter der Zinnschicht mit den Kupferdrähten liegt ein weiterer Isoliermantel aus einem HDPE-Kunststoff, der einen weiteren Zinnmantel mit Kupferdrähten umhüllt. Die Kupferdrähte umspinnen in beiden Fällen die Zinnschicht. Unter der zweiten Zinn-Kupfer-Schicht liegt ein weiterer Kunststoffmantel aus einem HDPE-Kunststoff, der ein Teflon-PCFE-Mantel umhüllt. Der Teflon-PCFE-Mantel umhüllt eine Kabelseele aus Kupfer bzw. Aluminium. Mit dem konventionellen Heizkabel kann eine maximale Temperatur von 125° und mit dem Multiflex-Heizkabel eine maximale Temperatur von 260° erzeugt werden. Für eine Flächenheizung wird die Temperatur auf max. 60°C begrenzt und entsprechend geregelt. Hergestellt wird dieses Wärmekabel unter der Bezeichnung EBECO und ist in unterschiedlichsten Längen lieferbar. Die beiden Ausführungen des beschriebenen Heizkabels als Wärmekabel 7 besteht darin, daß die Wärme gleichmäßig über die Länge verteilt erzeugt wird. So beträgt der Widerstand bei einem 5 bzw. 6 m langen Wärmekabel etwa 140 Ohm pro Meter und reicht abgestuft bis zu 100 bzw. 165 m bei 0,18 bis 0,25 Ohm pro Meter bei etwa 2000 Watt.

Der Aufbau einer Fußbodenheizung gemäß Fig. 1a mit Hilfe der Heizelementträger - und Heizelementtrageplatten gemäß den Fig. 2 bis 9 sei im folgenden erläutert.

Zu einer Baustelle werden die in Fig. 2 dargestellten Rollen 15 der Heizelementträgerplatten 1 sowie der Heizelementträgerabschlußplatten 2 transportiert.

Auf der Baustelle angekommen, werden auf dem Fußbodenelement 3 die Rollen ausgerollt. Hierbei wird zuerst die Heizelementträgerabschlußplatte 2 verlegt. Anschließend wird daneben die Heizelementträgeplatte 1 auf dem Fußbodenelement 3 ausgelegt. Auf dem Fußbodenelement 3 können dabei Abschnitte einer Kleberschicht aufgetragen werden, so daß beide Platten 1 und 2 wenigstens teilweise mit dem Fußbodenelement 3 verbunden sind.

Wie Fig. 1a zeigt, wird durch die ausgelegten Platten 1 und 2 der Verlegungsweg des Wärmekabels 7 vorgezeichnet. Das Wärmekabel 7 wird auf dem Ausschnittgrundflächenelement 27 der in diesem Fall zum Einsatz kommenden Ausnehmung 11 ausgelegt. Damit das Wärmekabel 7 aufgrund der Aufrollspannungen nicht aus den Heizelementlinearausnehmungen 11 und den Heizelementbogenausnehmungen 21 herausgedrückt wird, wird es mit Hilfe von Befestigungskrampen 8 festgehalten.

Ist das Wärmekabel 7 verlegt, wird anschließend eine Abdeckplane 5 in Form einer dünnen Folie über die Heizelementträgerplatte 1 und die Heizelementträgerabschlußplatte 2 gelegt. Anschließend werden als äußerer Belag Fliesen 6 verklebt. Die Fliesen 6 können aufgrund der glatten Oberfläche der Hartschaumplatte 13 direkt auf diese aufgeklebt werden. Ist die Hartschaumplatte 13 mit einer weiteren armierten Mörtelschicht versehen, können die Fliesen 6 auf diese geklebt werden. Der große Vorteil dieser Flächenheizung besteht in ihrer sehr geringen Bauhöhe, so daß sie insbesondere zur Sanierung von Altbauten eingesetzt werden kann. Ein weiterer Vorteil ist der, daß die Bauplatte 10 nicht nur wärmeisolierend wirkt, sondern auch selbsttragend ist. Hierdurch kann die sonst übliche Estrichschicht entfallen und sofort mit dem Verlegen der Fliesen 6 begonnen werden, so daß die Fußbodenheizung schnellstens in Betrieb genommen werden kann. Die Herstellungszeit für die Fußbodenheizung reduziert sich gegenüber der herkömmlichen Fußbodenheizung mit einem Ausgleichsestrich um etwa 80%.

Der Einsatz der Bauplatten 10 als Heizelementträgerplatten 1 und Heizelementträgerabschlußplatten 2 ist darüber hinaus in Wohnwagen, Wohnmobilen, Containern sowie in Großküchen gegeben.

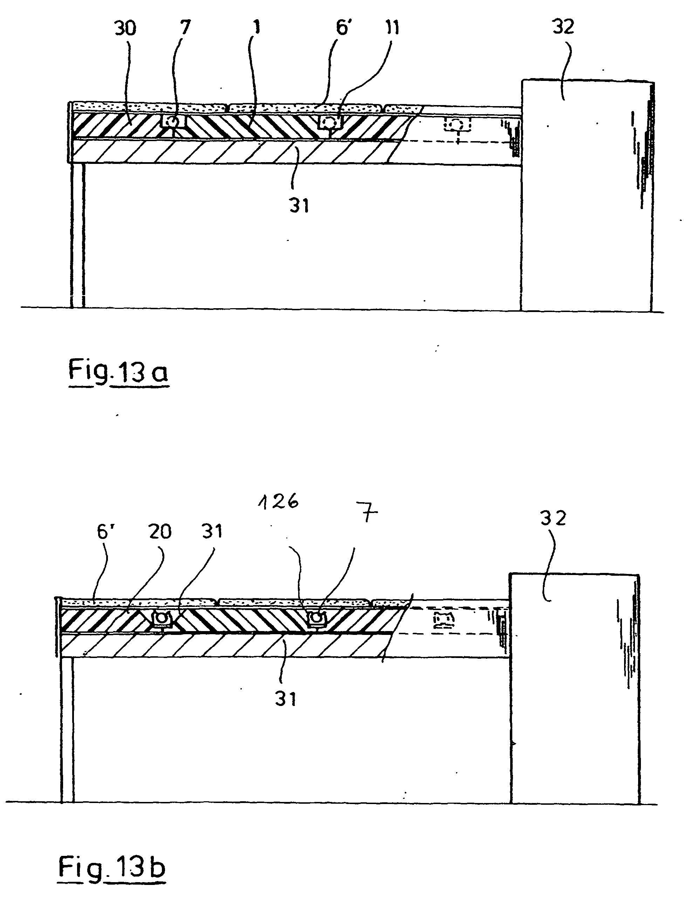

In Fig. 13a ist der Einsatz in einer Großküche dargestellt. In Großküchen muß für viele Personen Essen zu festen Zeiten bereit gestellt werden, das zu diesen Zeiten noch heiß ist. Hierfür werden auf einen Unterbau in Form eines Tisches 31 oder dergleichen Wärmeplatten 30 eingesetzt, die in der Nähe eines Herdes 32 aufgebaut sind. Die Wärmehalteplatte 30 wird in diesem Fall mit Hilfe der Heizelementträgerplatte 1 hergestellt, die auf dem Tisch 31 befestigt wird. Anschließend wird in den Heizelementlinearausnehmungen 11 das Wärmekabel 7 oder ein Fluid-Heizrohr verlegt. Die Heizelementträgerplatte 1 ist auch hier ebenso wie bei einer Fußbodenheizung zu beiden Seiten mit der Heizelementträgerabschlußplatte 2 versehen, so daß das Wärmekabel 7 mäanderförmig verlegt werden kann. Ist das Wärmekabel 7 verlegt, werden anschließend Fliesen 6' auf die Hartschaumplatte 13 geklebt. Anstelle der Fliesen 6' kann auch eine durchgehende Steinplatte oder Metallplatte zum Einsatz kommen.

In Fig. 1b ist der Aufbau einer Flächenheizung mit Heizelementträgerplatten 20 gezeigt.

Hier ist ebenfalls ähnlich wie in Fig. 1a ein Ausschnitt eines Raums dargestellt, der durch wenigstens ein Wandelement 4 und einen Unterbau in Form eines Fußelements 3 begrenzt ist. In die Wand 4 ist ein Fenster 40 eingesetzt. Das Fußbodenelement kann auch hier die Decke eines Neubaus oder ein bereits bestehender Boden eines zu renovierenden Gebäudes sein.

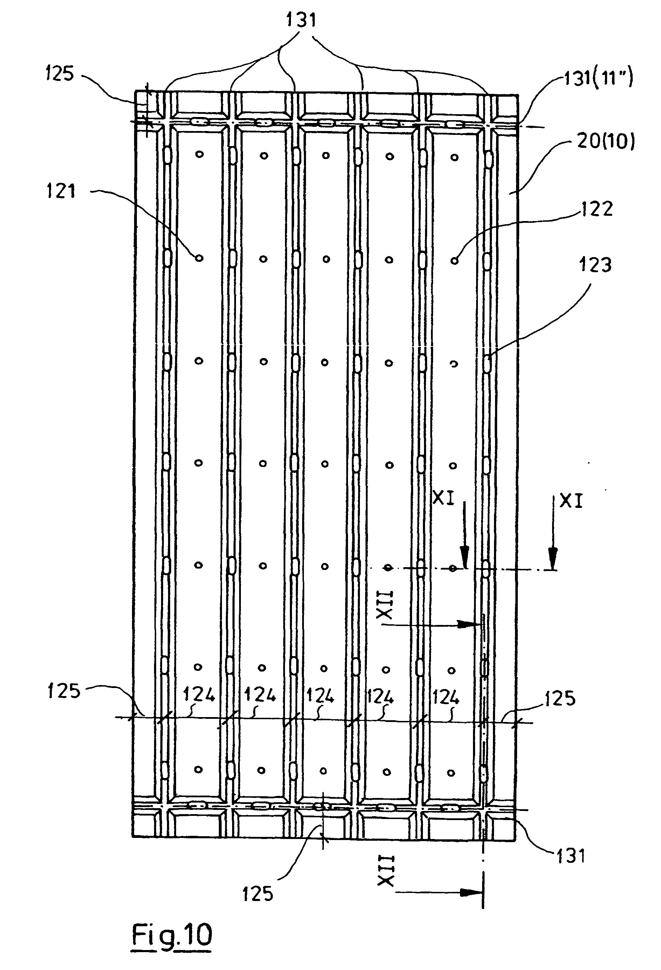

Für die Flächenheizung werden hier Heizelementtrageplatten 20 verlegt, wie sie im Detail in den Fig. 10 bis 12 gezeigt sind.

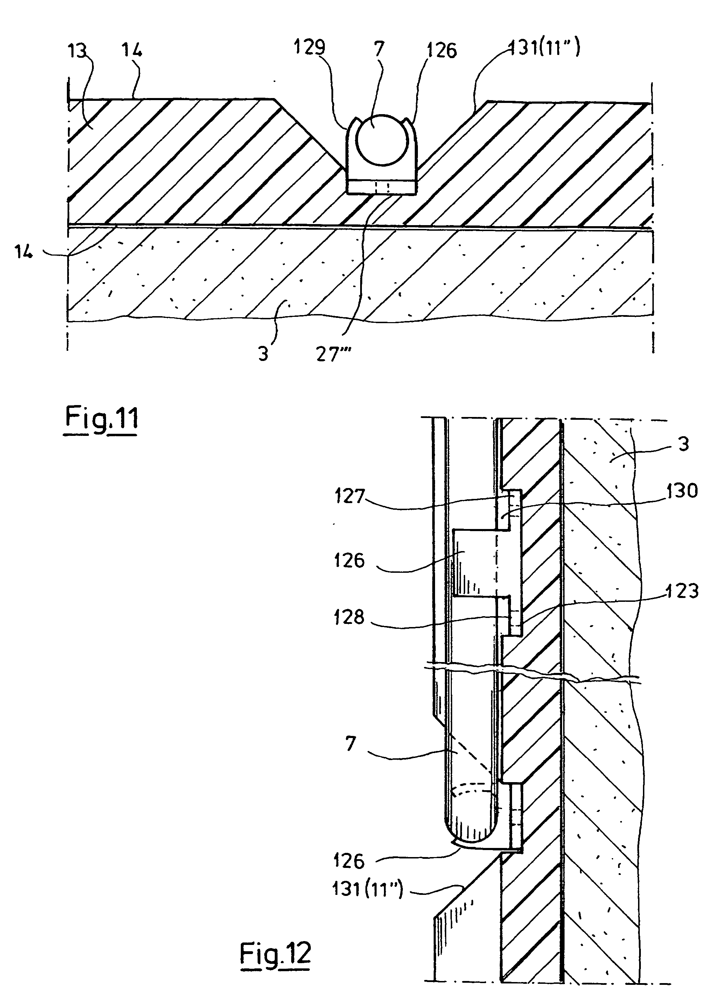

Die Heizelementträgerplatte 20 ist eine Bauplatte, die aus der Hartschaumplatte 13 besteht, die auf beiden Seiten mit einer armierten Mörtelschicht 14 versehen ist. Sie hat eine Breite von 600 mm und eine Länge von 1200 mm. Ihre Dicke beträgt gemäß Fig. 11 und 12 20 mm.

In einem Heizungsausnehmungsabstand 124 sind jeweils nebeneinander liegend Heizelementgrabenausnehmungen 131 eingebracht. Die Heizungsausnehmungsabstände 124 sind alle gleich lang ausgebildet. Die Länge beträgt etwa 100 mm. Die Heizelementgrabenausnehmungen weisen einen Abschnitts- und Flächenelement 27"' auf. Dieses Abschnittsgrundflächenelement hat eine Breite von etwa 10 mm und liegt etwa 10 mm tief gegenüber der oberen armierten Mörtelschicht 14. In das Abschnittgrundflächenelement 27"' sind in gleichen Abständen von etwa 165 mm Klippausnehmungen 123 eingebracht. Die Klippausnehmungen haben eine Länge von ca. 32 mm und sind etwa 5 mm tief.

In gleicher Art und Weise sind an der oberen und an der unteren Schmalkante der Heizelementträgerplatte 20 jeweils eine Heizelementgrabenausnehmung 131 angeordnet. Die Heizelementgrabenausnehmungen 131 haben die gleiche Konfiguration wie die Heizelementlinearausnehmungen 11".

Die erste und die letzte lange Heizelementgrabenausnehmung 131 ist bis zum Rand der Heizelementträgerplatte 20 in einem Heizungsausnahmeendabstand 125 eingebracht, der halb so lang ist wie der Abstand 124. Das gleiche gilt für die beiden querliegenden Heizelementgrabenausnehmungen 131.

Zwischen den Heizelementgrabenausnehmungen 131 sind neben den Klippausnehmungen 123 Entdampfungsausnehmungen 122 eingebracht, die von der oberen armierten Mörtelschicht 14 durch die Hartschaumplatte 13 und die unterste armierte Mörtelschicht 14 hindurch reichen. Die Entdampfungsausnehmungen sind als runde Bohrungen ausgebildet, die einen Durchmesser von etwa 10 mm haben.

In die einzelnen Klippausnehmungen 123 werden Rohrklippkörper 126 eingebracht, die im einzelnen in den Fig. 11 und 12 gezeigt sind.

Der Rohrklippkörper 126 weist einen Klippkörperfuß 127 auf. Dieser ist plattenförmig ausgebildet. Auf den Klippkörperfuß sind zwei sich gegenüberliegende Klippspangenkörper 129 angeordnet. Zu beiden Seiten des Klippspangenkörpers sind in den Klippkörperfuß Fußausnehmungen 128 eingebracht. Die Fußausnehmungen sind als runde Bohrungen ausgebildet.

Nachdem die Klippausnehmungen 123 in die Heizelementträgerplatte 20 eingebracht sind, werden sie wenigstens teilweise mit Leim ausgefüllt. In diesen Leim wird der Klippkörperfuß 127 eingedrückt. Beim Eindrücken quillt der Leim durch den Fußausnehmungen 128 und an den Seiten bis auf die Oberfläche des Klippkörperfuß. Nach dem Erkalten des Leims wird der Klippkörperfuß von einem Leimkörper 130 in der Klippausnehmung 123 gehalten.

Sind die Heizelementträgerplatten 20 fertiggestellt, werden sie, wie Fig. 1b zeigt, hintereinander auf dem Fußbodenelement 3 verlegt. Wie deutlich zu erkennen ist, werden durch das Nebeneinanderlegen von zwei Heizelementträgerplatten 20 zwei nebeneinanderliegende, kreuzende Heizelementgrabenausnehmungen 131 mit einem doppelt so breiten Heizungsausnehmungsendabstand 125, der gleich dem Heizungsausnehmungsabstand 124 ist.

Unter dem Fenster 40 wird eine Heizelementträgerplatte so verlegt, daß die Heizelementgrabenausnehmungen 131 parallel zum Wandelement 4 verlaufen. In gleicher bzw. ähnlicher Art und Weise wird das Fußbodenelement 3 vollständig mit den Heizelementträgerplatten 20 belegt.

Ist das Fußbodenelement 3 vollständig belegt, wird anschließend das Heizelement eingelegt. Das Heizelement 7 ist in diesem Fall das Wärmekabel 7, dessen Aufbau bereits ausführlich erläutert wurde. Deutlich wird, daß die Abstände der nebeneinanderliegenden Wärmekabel 7 unterschiedlich gewählt werden kann. Insbesondere im Bereich des Fensters 40 ist das Wärmekabel dicht nebeneinander verlegt. Hierdurch ist gesichert, daß solche Kältebrücken oder Kältekonzentrationspunkte in einem Raum besonders berücksichtigt werden können. Der von außen eindringenden Kälte wird ein wirksamer Wärmeschleier entgegengesetzt, der dafür sorgt, daß der dahinter liegende Raum gleichmäßig durchgewärmt wird. Auch andere Standorte im Raum können mit dem dichter verlegten Wärmekabel 7 versehen werden.

Ist das Wärmekabel 7 verlegt, kann anschließend die Abdeckplane 5 oder direkt die Fliesen auf die Bauplatte und die Schleifen des Wärmekabels 7 wenigstens teilweise gelegt werden. Beim Verlegen wird ein Fliesenestrich verwendet. Dieser Fliesenestrich füllt die Heizelementgrabenausnehmungen 131 wenigstens teilweise aus.

Von besonderem Vorteil ist, daß die Schlangen des Wärmekabels 7 direkt in Berührung mit den darüber liegenden Fliesen 6 kommen. Hierdurch wird die von dem Wärmekabel erzeugte Wärme direkt auf die Fliesen übertragen. Der in die Heizelementgrabenausnehmungen 131 fließende Fliesenkleber dient zur weiteren Arretierung des Wärmekabels 7.

Ein weiterer Vorteil ist, daß bei feuchten Fußbodenelementen die Entdampfungsausnehmungen 122 wie "Schornsteine" wirken. Die durch die Wärme verdunstende Feuchtigkeit wird zielgerichtet durch die Bauplatte hindurch geleitet und kann übe das Fugenmaterial zwischen den Fliesen nach außen gelangen. Wären die Entdampfungsausnehmungen 122 nicht vorhanden, würde die Feuchtigkeit zwar auch verdunsten, könnte aber unter der abdichtenden Bauplatte nicht nach außen gelangen. Die verdunstete Feuchtigkeit dringt in diesem Fall in das Fußbodenelement 3 und in die armierte Mörtelschicht 14 ein und führt zu deren Zerstörung. Ein weiterer Vorteil ist der, daß das Wärmekabel 7 entsprechend seinen Widerstandswerten mit einer festgelegten Länge verlegt wird. Der Anschluß des Wärmekabels 7 erfolgt an einer bestimmten Stelle, die vorher bereits festgelegt wird. Das Herausführen einer Vielzahl von Anschlußkabel bzw. das Berücksichtigen einer Vielzahl von Anschlußstellen entfällt.

In Fig. 13b ist der Einsatz der Heizelementträgerplatte 20 in der Großküche dargestellt. Hierbei wird auf dem Tisch 31 in der Nähe des Herdes 32 die Heizelementträgerplatte 20 aufgelegt. Sie ist in ihren Ausmaßen dem Tisch 31 angepaßt. Durch die Wahl der Heizungsausnehmungsabstände 124 kann das Wärmekabel 7 unterschiedlich verlegt werden. Die Rohrklippkörper 126 sorgen dafür, daß das in Schleifen verlegte Wärmekabel 7 wirksam gehalten wird.

Anschließend werden dann die Fliesen 6' als Wärmeabdeckschicht auf die Platte 20 geklebt. Auch hier können anstelle der Fliesen 6' eine durchgehende Stein- oder Metallplatte zum Einsatz kommen.

## Patentansprüche

1. Heizelementträgerplatte (1), die mit einem strangförmigen Heizelement (7) belegbar ist und die aus einer Kunststoff-Hartschaumplatte (13) besteht, die auf wenigsten einer Flachseite mit einer armierten ausgehärteten Mörtelschicht (14) belegt ist und von der anderen Flachseite her mit Aufnahmeausnehmungen (11,11',11") versehen ist, in die das Heizelement (7) einlegbar ist, wobei die Armierung der Mörtelschicht unverletzt bleibt, **dadurch gekennzeichnet, dass** in die Heizelementträgerplatte (1) von der Sohle der Aufnahmeausnehmungen (11,11',11") bis zur armierten Mörtelschicht (14) Ausnehmungsschnitte (12) durch die Hartschaumplatte (13) geführt sind, so dass die Heizelementträgerplatte (1) zu einer Rolle aufrollbar ist.

2. Heizelementträgerplatte nach Anspruch 1, **dadurch gekennzeichnet, dass** die Aufnahmeausnehmung (11,11',11") im Querschnitt V-förmig oder mehreckig ist.

3. Heizelementträgerplatte nach Anspruch 1, **dadurch gekennzeichnet, dass** in die Aufnahmeausnehmung ein Grundflächenelement (27) eingelegt ist, auf dem das Heizelement (7) verlegbar ist.

4. Heizelementträgerplatte nach Anspruch 3, **dadurch gekennzeichnet, dass** das Grundflächenelement (27) wenigstens auf der unteren Seit mit einer Klebstoffschicht (91;92) versehen ist.

5. Heizelementträgerplatte nach einem der vorhergehenden Ansprüche, **dadurch gekennzeichnet, dass** die Hartschaumplatte (13) auf beiden Seiten mit einer armierten Mörtelschicht beschichtet ist und als vorgefertige Bauplatte ausgeführt ist, wobei die obere Mörtelschicht zur Aufnahme von Aufnahmeausnehmungen (11,11,'11") aufgeschnitten ist.

## Claims

1. Heating element support plate (1), on which a heating element (7) in the form of a loop can be placed and which consists of a plastic hard foam plate (13) which is covered on a flat side with a reinforced, matured layer of mortar (14) and from the other flat side is provided with receiving recesses (11, 11', 11"), into which the heating element can be inserted wherein the reinforcement of the mortar layer remains unaffected, **characterised in that** recess sections (12) are guided through the hard foam plate (13) into the heating element support plate (1) from the floor of the receiving recesses (11, 11', 11") to the reinforced mortar layer (14) with the result that the heating element support plate can be rolled up into a roll.

2. Heating element support plate according to claim 1, **characterised in that** the receiving recess (11, 11', 11") is V-shaped in cross-section or has multiple corners.

3. Heating element support plate according to claim 1, **characterised in that** a base area element (27) is inserted in the receiving recess, on which base area element (27) the heating element (7) can be laid.

4. Heating element support plate according to claim 3, **characterised in that** the base area element (27) is provided with an adhesive layer (91; 92) at least on the lower side.

5. Heating element support plate according to one of the preceding claims, **characterised in that** the hard foam plate (13) is coated on both sides with a reinforced layer of mortar and is designed as a pre-manufactured building board wherein the upper mortar layer is cut for the arrangement of receiving recesses (11, 11', 11").

## Revendications

1. Plaque de support (1) d'élément chauffant, qui peut être garnie d'un élément chauffant (7) en forme de cordon et qui se compose d'une plaque (13) de mousse rigide de matière plastique, qui est revêtue d'une couche de mortier durcie armée (14) sur au moins un côté plat et comporte des évidements récepteurs (11, 11', 11") qui sont accessibles depuis l'autre côté plat et dans lesquels l'élément chauffant (7) peut être inséré, l'armature de la couche de mortier restant intacte, **caractérisée en ce que** des rainures (12) d'évidements sont ménagées à travers la plaque (13) de mousse rigide de la plaque de support (1) d'éléments chauffants à partir du fond des évidements récepteurs (11, 11', 11") jusqu'à la couche de mortier armée (14), d'une manière telle que la plaque de support (1) d'élément chauffant peut être enroulée pour former un rouleau.

2. Plaque de support d'élément chauffant selon la revendication 1 , **caractérisée en ce que** la section de l'élément récepteur (11, 11', 11") en coupe transversale est en forme de V ou de polygone.

3. Plaque de support d'élément chauffant selon la revendication 1, **caractérisé en ce qu'**un élément (27) de surface de fond, sur lequel l'élément chauffant (7) peut être posé, est introduit dans l'évidement récepteur.

4. Plaque de support d'élément chauffant selon la revendication 3, **caractérisée en ce que** l'élément (27) de surface de fond comporte une couche d'adhésif (91; 92) au moins sur le côté inférieur.

5. Plaque de support d'élément chauffant selon l'une quelconque des revendications précédentes, **caractérisée en ce que** la plaque (13) de mousse rigide est revêtue sur ses deux côtés d'une couche de mortier armée et est réalisée sous forme de panneau préfabriqué de construction, dans lequel la couche de mortier supérieure est découpée pour recevoir les évidements récepteurs (11, 11', 11").
